(19) Europäisches Patentamt

European Patent Office

Office européen des brevets

(11) **EP 0 971 492 B1**

(12) **EUROPÄISCHE PATENTSCHRIFT**

(45) Veröffentlichungstag und Bekanntmachung des Hinweises auf die Patenterteilung:
**14.09.2005  Patentblatt 2005/37**

(51) Int Cl.$^7$: **H04B 10/158**, H04B 10/148

(21) Anmeldenummer: **99113206.9**

(22) Anmeldetag: **08.07.1999**

(54) **Empfangseinrichtung für eine optische HF-Signalübertragungsstrecke**

Receiver for an optical HF-signal transmission link

Récepteur de liaison de transmission optique de signal HF

(84) Benannte Vertragsstaaten:
**AT CH DE FR GB LI**

(30) Priorität: **10.07.1998  DE 19830897**
**22.10.1998  DE 19848723**

(43) Veröffentlichungstag der Anmeldung:
**12.01.2000  Patentblatt 2000/02**

(73) Patentinhaber: **EADS Deutschland GmbH**
**81663 München (DE)**

(72) Erfinder:
• **Banerjee, Sandip**
**89264 Weissenhorn (DE)**

• **Goebel, Uhland**
**89250 Senden (DE)**

(74) Vertreter: **Meel, Thomas**
**Patentassessor,**
**c/o Dornier GmbH**
**L H G**
**88039 Friedrichshafen (DE)**

(56) Entgegenhaltungen:
**EP-A- 0 559 102          DE-A- 3 431 896**
**US-A- 4 697 284          US-A- 5 142 402**
**US-A- 5 463 461          US-A- 5 757 531**

**Beschreibung**

Die Erfindung betrifft eine Empfangseinrichtung für eine optische HF-Signalübertragungsstrecke zur Erzeugung eines elektrischen ZF-Signals, gemäß dem Oberbegriff des Anspruchs 1.

Die Übertragung von Signalen auf optischem Wege und insbesondere durch optische Fasern ("Lichtleiter") ist infolge der Entwicklung kostengünstiger und leistungsfähiger optoelektronischer Halbleiter-Bauelemente (Fotodioden, Fototransistoren, Laserdioden) zu einer interessanten Alternative zur drahtgebundenen elektrischen Übertragung geworden. Insbesondere in den Fällen, in denen eine störungsfreie und unverfälschte Signalübertragung über größere Entfernungen von besonderer Bedeutung ist, haben optische Übertragungsstrecken entscheidende Vorteile, da keine aufwendigen Sende- und Empfangsverstärker erforderlich sind oder Maßnahmen zur Leitungsabschirmung getroffen werden müssen. Es liegt auf der Hand, daß diese Vorteile um so stärker ins Gewicht fallen, je höher die Frequenzen der übertragenen Signale sind.

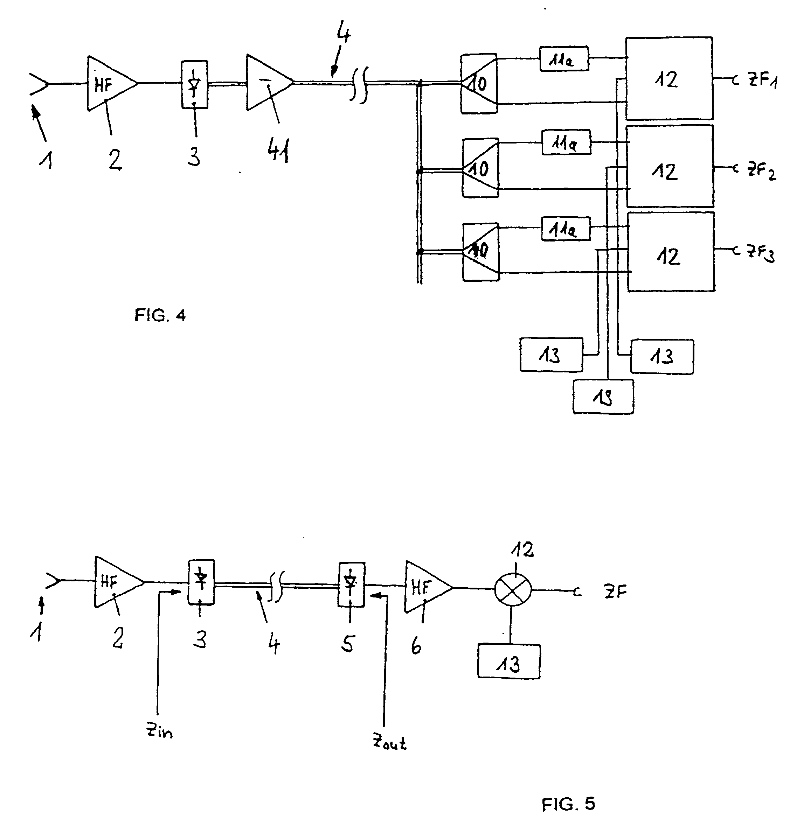

So werden zum Beispiel in Radaranlagen zur Übertragung der Signale zwischen einer Antenne und einer Verarbeitungseinheit optische HF-Signalübertragungsstrecken eingesetzt. Ein entsprechendes Blockschaltbild ist in Figur 5 gezeigt. Die von der Antenne 1 empfangenen Signale werden von einem HF-Eingangsverstärker 2 verstärkt und modulieren das von einer Laserdiode 3 ausgesandte Licht. Das modulierte Licht wird über eine optische Faser 4 geleitet und in einer Empfangseinrichtung auf eine Fotodiode 5 gerichtet. Der durch die Fotodiode 5 fließende Strom ist direkt von der Intensität des eingestrahlten Lichtes abhängig, so daß nach geeigneter Strom-Spannungswandlung und Verstärkung mit einem HF-Verstärker 6 die HF-Spannung wiedergewonnen und anschließend durch Mischung mit einer hochfrequenten Spannung eines Oszillators 13 in einem Mischer 12 in eine gewünschte Zwischenfrequenz umgesetzt und der weiteren Verarbeitung zugeführt werden kann.

Diese Konfiguration hat jedoch auch verschiedene Nachteile. Einerseits entstehen Umwandlungsverluste durch die opto-elektrische Wandlung in der Fotodiode 5, andererseits werden durch die Mischung des HF-Signals in dem Mischer 12 Mischverluste verursacht, die zusammen den Signal/Rauschabstand verschlechtern und gegebenenfalls entsprechende Kompensationsmaßnahmen erforderlich machen. Der Gesamtverlust G der optischen Übertragungsstrecke läßt sich durch folgende Formel ausdrücken:

$$G = 0.5 \, h_L^2 \, G_{OT} \, h_D^2 \, z_{OUT}/Z_{IN}$$

Hierbei bezeichnet GOT die optischen Verluste (insbesondere Umwandlungs- und Mischverluste), $h_L$ einen Quellenfaktor, $h_D$ einen Detektorfaktor, $Z_{in}$ die Eingangsimpedanz und $Z_{out}$ die Ausgangsimpedanz der optischen Verbindung.

Aus dieser Gleichung wird deutlich, dass der Gesamtverlust durch eine Erhöhung der Eingangsimpedanz und eine Verringerung der Ausgangsimpedanz verringert werden könnte. Da jedoch in Systemen, die im Hochfrequenz- und Mikrowellenbereich arbeiten, die Eingangs- und Ausgangsimpedanzen zur Anpassung und maximalen Leistungsübertragung stets 50 Ohm betragen sollen, ist eine Verringerung der Verluste durch Änderung dieser Impedanzen nicht möglich bzw. sinnvoll.

Weiterhin werden Rauschspannungen erzeugt, die sich aus dem thermischen Rauschen und dem relativen Intensitätsrauschen (RIN -Relative Intensity Noise) der Laserdiode, sowie dem Schrotrauschen der Fotodiode zusammensetzen. Das Schrotrauschen wird hauptsächlich durch die auf die Fotodiode einfallende optische Dauerstrichleistung verursacht. Das Rauschen des Mischers setzt sich schließlich ebenfalls aus thermischem Rauschen sowie dem durch die Detektordioden erzeugten Schrotrauschen zusammen, das von der Höhe der Oszillatorspannung abhängig ist.

US 5,142,402 beschreibt eine Empfangseinrichtung, bei welcher ein Empfangssignal mit einem optischen Oszillatorsignal kombiniert wird und anschließend in einem Polarisator in zwei Signale mit jeweils senkrecht zueinander stehender Polarisation gewandelt wird. Diese Teilsignale werden auf zwei Fotodioden gegeben, welche jeweils mit einer Oszillatorsignal eines Oszillators gemischt werden. US 5,463,461 beschreibt eine Empfangseinrichtung, bei welcher ein Empfangssignal in zwei Teilsignale aufgespalten wird, wobei jeder Teilstrahl jeweils einem Phasenschieber zugeführt und anschließend jeweils einer Fotodiode zugeführt wird.

Der Erfindung liegt die Aufgabe zugrunde, eine Empfangseinrichtung für eine verbesserte optische HF-Signalübertragungsstrecke der eingangs genannten Art zu schaffen, bei der die oben genannten Verluste und Rauschanteile wesentlich geringer sind.

Die erfindungsgemäße Lösung dieser Aufgabe ist in Anspruch 1 angegeben. Die Unteransprüche beinhalten vorteilhafte Ausführungsformen der Erfindung.

Die Aufgabe wird mit einer Empfangseinrichtung der eingangs genannten Art gelöst, die sich auszeichnet durch ein Verzögerungsglied zum Beaufschlagen des ersten Teilstrahls des optischen HF-Signals mit einer Phasenverschiebung von etwa 180° gegenüber dem zweiten Teilstrahl und durch die zweite Einrichtung, welche einen Phasenschieber zur Erzeugung einer um etwa 180° gegenüber einer ersten Oszillatorfrequenz phasenverschobenen zweiten Oszillatorfrequenz umfasst.

Diese Lösung hat mehrere entscheidende Vorteile. Durch die verringerte Anzahl von Komponenten können die Herstellungskosten vermindert und die Zuverlässigkeit erhöht werden. Insbesondere ist kein HF-Verstärker erforderlich, sondern das an den Fotodioden in die ZF-Ebene gemischte Signal kann mit einem wesentlich einfacher zu realisierenden ZF-Verstärker verstärkt werden.

Weiterhin fallen die Umwandlungs- und Mischverluste nicht an getrennten Baugruppen, sondern nur an den Fotodioden an. Dies hat zur Folge, dass sie geringer sind und wesentlich einfacher beeinflusst bzw. kompensiert werden können. Dadurch, dass zwei Fotodioden vorgesehen sind, ergibt sich die Möglichkeit einer Gegentaktansteuerung, bei der jede Fotodiode nur die Hälfte der empfangenen Gesamt-Lichtleistung erfasst und das Schrotrauschen geringer ist.

Die Fotodioden brauchen auch nicht wie bei der bekannten Schaltung gemäß Figur 5 im linearen Bereich betrieben zu werden. Schließlich ist das HF-Signal wesentlich besser von dem Signal des Oszillators entkoppelbar, als es bei den bekannten Mischern zum Beispiel gemäß Figur 5 der Fall ist.

Die Fotodioden können entweder seriell (d.h. die Kathode der einen Fotodiode ist mit der Anode der anderen Fotodiode verbunden) oder antiseriell (d.h. eine Fotodiode ist gegenüber der seriellen Schaltung umgepolt) geschaltet sein.

Die Fotodioden können ferner durch das optische HF-Signal gleichphasig ausgesteuert werden, wobei an dem inneren Anschluß (Verbindungspunkt) der Fotodioden die zweite Einrichtung sowie ein Bandsperrfilter zur Unterdrückung der Oszillatorfrequenz anliegt, über das dem Ausgangsverstärker ein ZF-Strom zugeführt wird.

Das Bandsperrfilter ist dabei vorzugsweise durch ein erstes, in Reihe geschaltetes Leitungselement und ein zweites, parallel geschaltetes, offenes Leitungselement gebildet, die jeweils eine Länge von etwa einem Viertel der Wellenlänge der Oszillatorfrequenz aufweisen.

Vorzugsweise wird der erste Teilstrahl des optischen HF-Signals mit einer Phasenverschiebung von etwa 180° gegenüber dem zweiten Teilstrahl beaufschlagt. Zu diesem Zweck ist ein Verzögerungsglied vorgesehen, das entweder eine schaltbare optische Verzögerungsleitung ist, oder alternativ eine dispersive optische Faser darstellt, wobei dann ein Mittel zur Erzeugung einer einstellbaren Vorspannung für eine das optische HF-Signal erzeugende Laserdiode vorgesehen ist.

Weiterhin kann die von der zweiten Einrichtung erzeugte Oszillatorfrequenz an den inneren Anschluß (Verbindungspunkt) der Fotodioden geführt und das ZF-Signal an den äußeren Anschlüssen der Fotodioden abgegriffen und dem Ausgangsverstärker zugeführt werden.

Alternativ dazu-ist es auch möglich, mit der zweite Einrichtung die Fotodioden über ihre äußeren Anschlüsse im Gegentakt anzusteuern, wobei der Abgriff des Ausgangsverstärkers an dem inneren Anschluß (Verbindungspunkt) der Fotodioden liegt.

Die zweite Einrichtung zur Gegentaktansteuerung der Fotodioden umfaßt dabei einen Phasenschieber zur Erzeugung einer um etwa 180° gegenüber einer ersten Oszillatorfrequenz phasenverschobenen zweiten Oszillatorfrequenz sowie einen ersten und einen zweiten Verstärker, über den die erste bzw. zweite Oszillatorfrequenz den äußeren Anschlüssen der Fotodioden zugeführt wird.

Anstelle der Fotodioden können auch andere entsprechend aussteuerbare opto-elektrische Wandler eingesetzt werden.

Besonders bevorzugt ist die erfindungsgemäße Empfangseinrichtung in einem Breitbandempfänger für eine optische Übertragungsstrecke einsetzbar, der eine Mehrzahl von Empfangskanälen aufweist.

Weitere Einzelheiten, Merkmale und Vorteile der Erfindung ergeben sich aus der folgenden Beschreibung von bevorzugten Ausführungsformen anhand der Zeichnung. Es zeigt:

Fig. 1    ein Prinzipschaltbild einer Übertragungsstrecke mit einer erfindungsgemäßen Empfangseinrichtung;

Fig. 2    ein Prinzipschaltbild einer alternativen Übertragungsstrecke mit einer erfindungsgemäßen Empfangseinrichtung;

Fig. 3a    eine erste Ausführungsform eines Mischers gemäß der Erfindung;

Fig. 3b    eine zweite Ausführungsform eines Mischers gemäß der Erfindung;

Fig. 3c    eine dritte Ausführungsform eines Mischers gemäß der Erfindung;

Fig. 3d    eine vierte Ausführungsform eines Mischers gemäß der Erfindung;

Fig. 4    eine Anwendung der Erfindung in einem Mehrkanalempfänger; und

Fig. 5    eine optische Übertragungsstrecke mit einer bekannten Empfangseinrichtung.

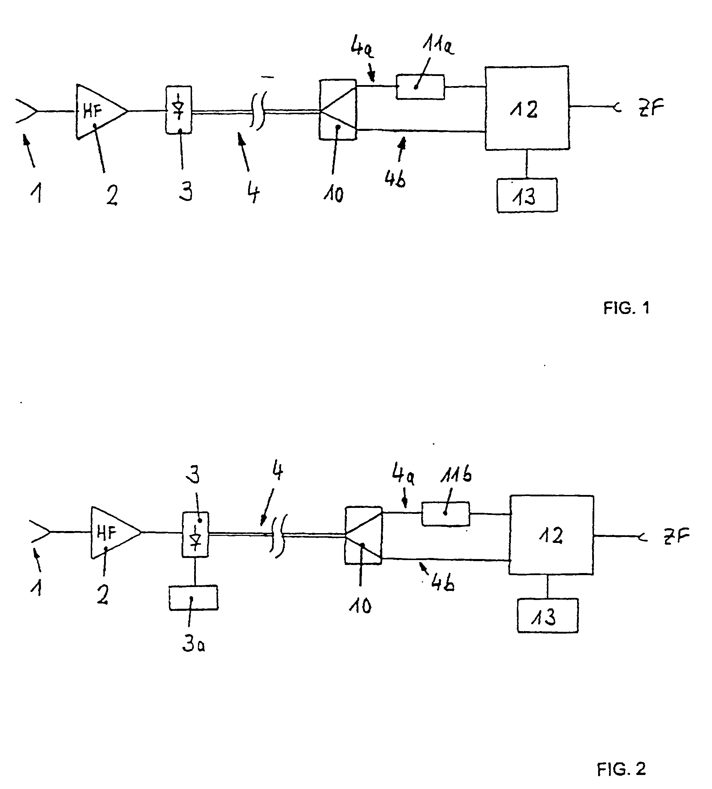

Die in den Figuren 1 und 2 gezeigten Schaltungen sind insbesondere zur Anwendung im Bereich der Mikrowellen und Millimeterwellen geeignet und können zur analogen Signalübertragung zwischen einem Eingangsteil (z.B. Radar-Empfangs- und Sendeteil) und einer Signalverarbeitungseinheit (nicht gezeigt) dienen, der die übertragenen Signale über eine erfindungsgemäße Empfangseinrichtung zugeführt werden. Ein besonderer Anwendungsfall sind abstimmbare ECM(Electronic Counter Measure)/ESM(Electronic Support Measure)-Empfänger und -Kommunikationssysteme.

Das Eingangsteil umfaßt im wesentlichen eine Antenne 1, einen HF-Verstärker 2 sowie eine Laserdiode 3, deren Licht mit der zu übertragenden HF-Spannung moduliert und dann in eine optische Faser 4 eingekoppelt wird.

Die Empfangseinrichtung am Ende der Übertragungsstrecke umfaßt einen Strahlteiler 10, an dessen Eingang die optische Faser 4 angeschlossen ist, zur Erzeugung eines ersten und eines zweiten Teilstrahls, die jeweils über ein erstes bzw. ein zweites optisches Faserstück 4a, 4b geführt werden. In das erste optische Faserstück 4a ist ein Verzögerungsglied 11a geschaltet, das den ersten Teilstrahl mit einer Phasenverschiebung von etwa 180° gegenüber dem zweiten Teilstrahl beaufschlagt.

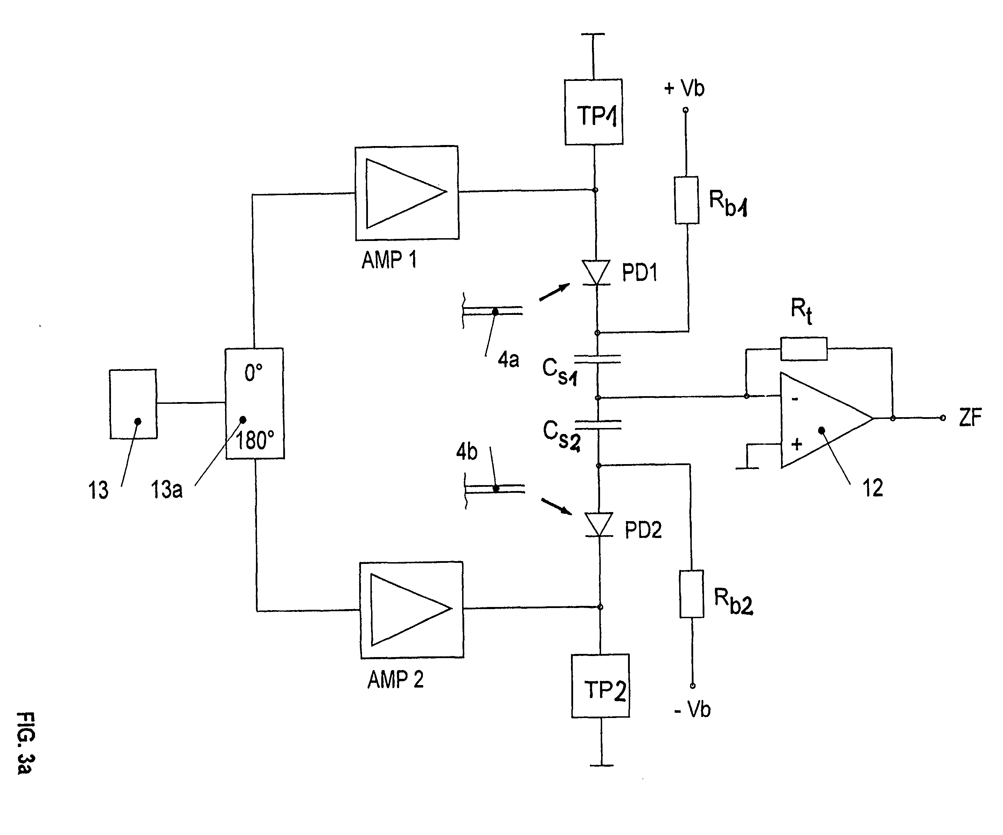

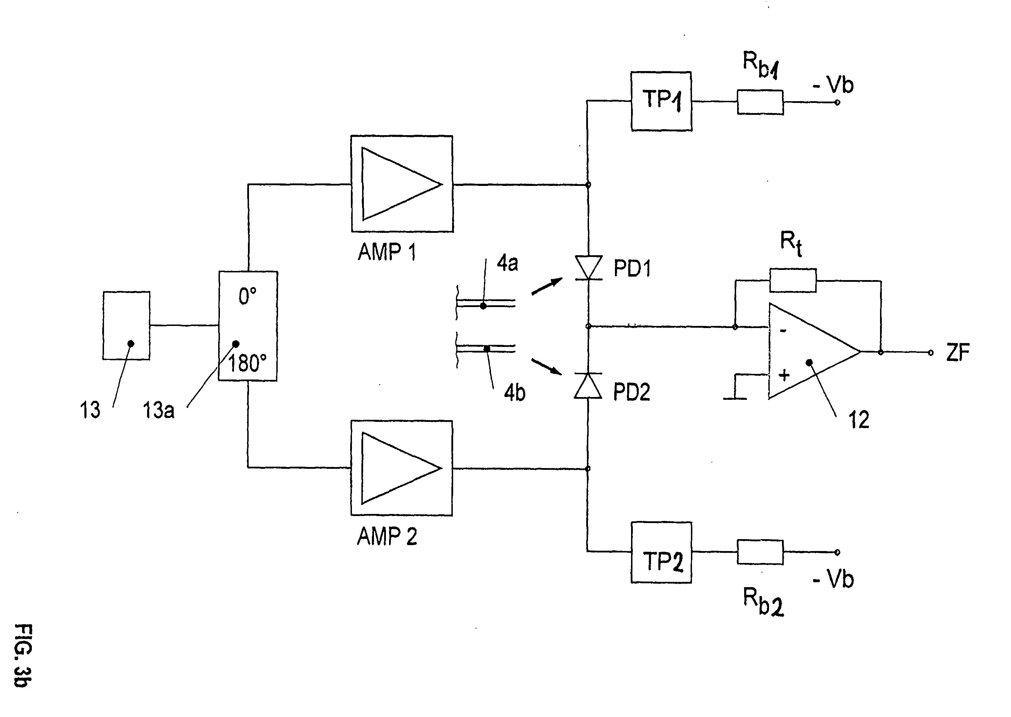

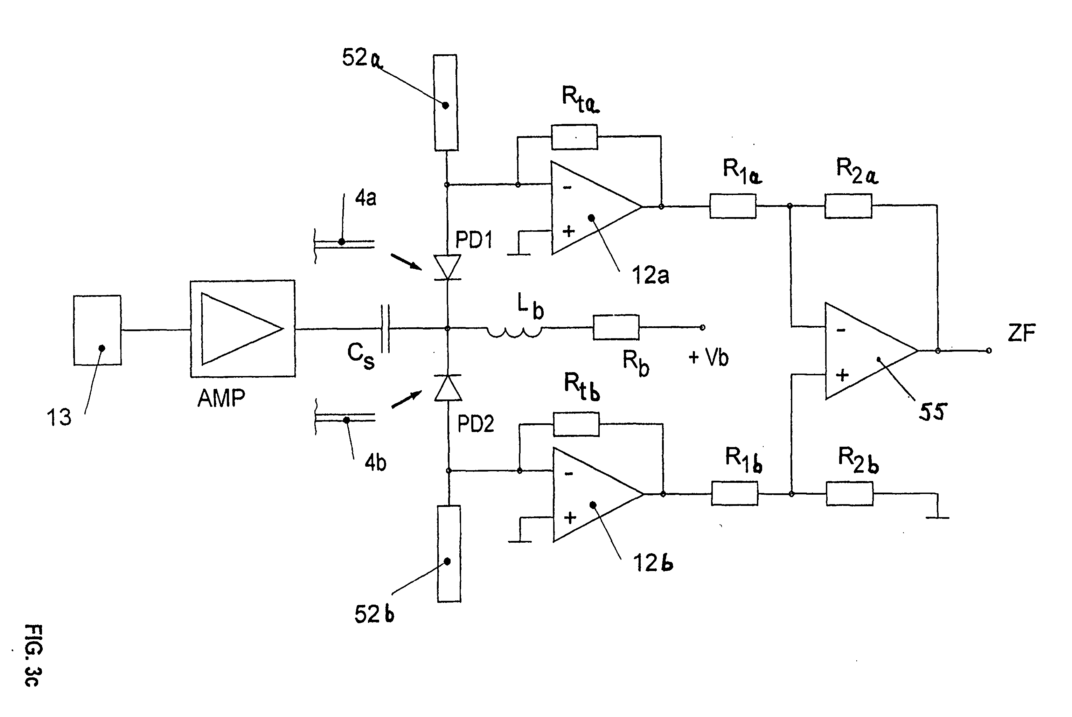

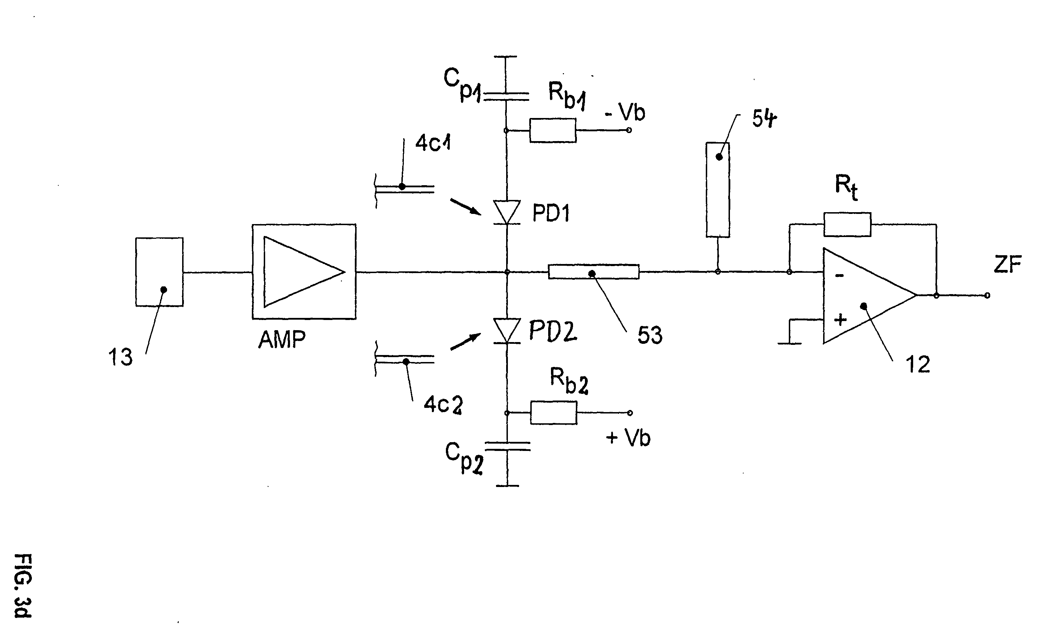

Die Ausgänge der beiden Faserstücke 4a, 4b liegen an den Eingängen eines optischen Mischers 12, der anhand der Figuren 3a bis 3d erläutert werden wird. Schließlich ist mit dem Mischer auch ein Oszillator 13 verbunden, der eine Spannung mit einer Frequenz erzeugt, mit der das empfangene HF-Signal auf eine gewünschte ZF-Signalspannung umgesetzt werden kann.

Gemäß Figur 1 ist eine zum Abgleich bzw. zur Anpassung an die Frequenz des HF-Signals vorzugsweise schaltbare und somit relativ breitbandig zu realisierende optische Verzögerungsleitung 11a der Länge

$$L = CF_{HF}/\mu 2pf_{HF}$$

vorgesehen, wobei L = Länge der Verzögerungsleitung, C = Lichtgeschwindigkeit, $F_{HF}$ = Phase des HF-Signals, $\mu$ = Brechungsindex der Faser und $f_{HF}$ = Frequenz des HF-Signals ist.

Der in Figur 2 gezeigte Aufbau unterscheidet sich von dem ersten Aufbau gemäß Figur 1 im wesentlichen durch die andere Art des Verzögerungsgliedes 11b. Dieses ist durch ein dispersives Faserstück in Verbindung mit einem Mittel 3a zur Erzeugung einer einstellbaren Vorspannung für die Laserdiode gebildet, wobei die Verzögerung durch Veränderung der Vorspannung an der Laserdiode, die zu einer Veränderung der Betriebswellenlänge und somit des Wellengangs bzw. der Laufzeit in der dispersiven Faser führt, eingestellt wird.

Figur 3a zeigt eine erste Ausführungsform eines opto-elektrischen Gegentaktmischer gemäß der Erfindung. Der über das erste Faserstück 4a geführte erste Teilstrahl wird auf eine erste Fotodiode PD1 gerichtet, während der über das zweite Faserstück 4b laufende zweite Teilstrahl auf eine zweite Fotodiode PD2 einfällt. Die Fotodioden sind seriell geschaltet und in bekannter Weise über jeweils einen Widerstand Rb1, Rb2 mit einer Vorspannung +Vb bzw. -Vb in Sperrrichtung vorgespannt. Zum Abblocken der Vorspannung dienen zwei Kondensatoren $C_{S1}$, $C_{S2}$ zwischen der Kathode der ersten Fotodiode PD1 und der Anode der zweiten Fotodiode PD2.

Die von dem Oszillator 13 erzeugte Spannung wird über einen ersten niederohmigen Verstärker AMP1 an die Anode der ersten Fotodiode PD1 angelegt. Die Oszillatorspannung wird außerdem mit einem Phasenschieber 13a in ihrer Phase um etwa 180° verschoben und dann über einen zweiten niederohmigen Verstärker AMP2 an die Kathode der zweiten Fotodiode PD2 geführt. Indem die Anode der ersten Fotodiode PD1 sowie die Kathode der zweiten Fotodiode PD2 über jeweils einen Tiefpaß TP1 bzw. TP2 mit Masse verbunden ist, wird verhindert, daß die Oszillatorspannungen nach Masse abfließen. Gleichzeitig stellt das jeweilige Tiefpaßfilter den Masse-Bezugspunkt für den in der Fotodiode PD1 bzw. PD2 erzeugten Mischstrom (ZF-Signal) sicher.

Durch die Niederohmigkeit der beiden Verstärker AMP1, AMP2 (z.B. GaAs-Verstärker) wird eine wesentlich bessere Entkopplung zwischen der Oszillatorspannung und der HF-Signalspannung erzielt als bei den bekannten Mischern gemäß Figur 5.

Schließlich ist ein als Transimpedanzverstärker 12 beschalteter Operationsverstärker vorgesehen, dessen invertierender Eingang eine Wechselstromverbindung (über die Kondensatoren $C_{S1}$, $C_{S2}$) mit der Kathode der ersten Fotodiode PD1 und der Anode der zweiten Fotodiode PD2 aufweist. Der nichtinvertierende Eingang ist mit Masse verbunden. Der Transimpedanzverstärker 12 ist außerdem mit einem entsprechenden Widerstand Rt rückgekoppelt.

Mit dem Mischer gemäß Figur 3a wird das mit der HF-Spannung amplitudenmodulierte Laserlicht in den Fotodioden PD1, PD2 in einen entsprechenden HF-Strom umgewandelt, wobei nach dem Gegehtaktprihzip jede Fotodiode nur mit jeweils der halben Leistung beaufschlagt wird. Durch Überlagerung mit der an den Fotodioden PD1, PD2 anliegenden Oszillatorspannung entsteht ein die Differenzfrequenz aufweisender ZF-Strom, der mit dem Transimpedanzverstärker 12 (Strom-Spannungswandler) in eine ZF-Signalspannung umgesetzt wird, die nun der weiteren Verarbeitung zugeführt werden kann.

Für die Funktion des Mischers ist entscheidend, daß die in der ersten bzw. zweiten Fotodiode PD1, PD2 entstehende Differenzfrequenz-Spannung in jeweils gleicher Phasenlage am Verbindungspunkt der Kondensatoren $C_{S1}$, $C_{S2}$ mit dem Transimpedanzverstärker 12 bezogen auf Massepotential anliegt. Dies wird dadurch erreicht, daß der durch die optische Faser 4a auf die erste Fotodiode PD1 treffende Lichtstrom eine seiner zeitlich schwankenden Intensität proportionale Anzahl von Ladungsträgerpaaren in der Sperrschicht freisetzt, die entsprechend der von außen anliegenden Vorspannung Vb einen Sperrstrom in der jeweiligen Fotodiode bewirken. Durch die gegenseitige Phasenverschiebung von 180° zwischen der aus der ersten bzw. der zweiten optischen Faser 4a, 4b austretenden Lichtleistung werden die erste bzw. die zweite Fotodiode PD1, PD2 im zeitlichen Wechsel ausgesteuert. Im Gegensatz dazu steuert das Oszillatorsignal die Fotodioden im Gleichtakt aus.

Die Umwandlungs- und Mischerverluste treten hier an nur einem Element auf und sind somit insgesamt geringer und außerdem leichter zu beeinflussen als bei der bekannten Schaltung gemäß Figur 5. Ferner ermöglicht der Transimpedanzverstärker 12 eine wesentlich rauschärmere Verstärkung als es mit dem bekannten HF-Verstärker 6 gemäß Figur 5 der Fall ist.

Die zweite Ausführungsform gemäß Figur 3b unterscheidet sich von der ersten Ausführungsform gemäß Figur 3a im wesentlichen dadurch, daß die Fotodioden antiseriell geschaltet sind (d.h. die zweite Fotodiode ist gegenüber der Schaltung in Fig. 3a umgekehrt gepolt), daß die beiden Kondensatoren $C_{S1}$, $C_{S2}$ entfallen und daß den Anoden der Fotodiode PD1 bzw. PD2 zur Vorspannung in den Sperrbereich eine gleich gepolte, negative Vorspannung -Vb über eine Reihenschaltung aus einem Vorwiderstand Rb1 und einem Tiefpaß TP1 bzw. aus einem Vorwiderstand Rb2 und einem Tiefpaß TP2 zugeführt wird.

Die beiden Fotodioden PD1, PD2 werden über den 180°-Koppler 13a und den jeweils vorzugsweise niederohmigen ersten und zweiten Verstärker AMP1, AMP2 im Gegentakt ausgesteuert. Der Verbindungspunkt der Kathoden der beiden Fotodioden PD1, PD2 ist aufgrund der Gegentaktaussteuerung von dem Signal des Oszillators isoliert. Der Gleichstromkreis wird über den niederohmigen Eingang des Transimpedanzverstärkers 12 geschlossen. Die Tiefpaß TP1 bzw. TP2 stellt am Verbindungspunkt mit der Anoden der ersten bzw. zweiten Fotodiode PD1, PD2 einen hochohmigen Eingangswiderstand für das Oszillatorsignal und einen niederohmigen Eingangswiderstand für das ZF-Signal dar. Die Signalaussteuerung erfolgt wieder mit einer Phasenverschiebung von 180° über die optischen Fasern 4a und 4b.

Die Vorteile dieser Ausführungsform gegenüber derjenigen in Figur 3a liegen in erster Linie in einem einfacheren Aufbau, da die beiden Fotodioden PD1, PD2 an ihren Kathoden direkt miteinander verbunden sind, so daß sie auch als Doppeldiode auf einem Chip realisierbar sind. Außerdem wird nur eine (negative) Vorspannung -Vb benötigt.

Bei der in Figur 3c gezeigten dritten Ausführungsform entfällt der 180°- Koppler 13a, und das Signal des Oszillators 13 wird direkt an einen Verstärker AMP angelegt. Das Ausgangssignal des Verstärkers wird über einen Kondensator $C_S$ an die miteinander verbundenen Kathoden der antiseriell geschalteten Fotodiode PD1, PD2 geführt. An diesem Verbindungspunkt liegt über einen Widerstand Rb und eine Induktivität Lb auch eine positive Sperrspannung +Vb an. Die Anoden der Fotodioden sind jeweils mit einer am Ende offenen Stichleitung 52a, 52b mit einer Länge von jeweils etwa einem Viertel der Wellenlänge verbunden, die durch Impedanztransformation einen virtuellen Kurzschluß an den Anoden erzeugen. Mit den Anoden der beiden Fotodioden ist ferner jeweils ein invertierender Eingang eines ersten bzw. zweiten Verstärkers 12a, 12b (vorzugsweise Transimpedanzverstärker) verbunden, der jeweils über einen Widerstand $R_{ta}$, $R_{tb}$ rückgekoppelt ist. Die beiden Ausgänge der Verstärker 12a, 12b sind über jeweils einen Widerstand R1a, R1b an den Eingang eines Differenzverstärkers 55 geführt, der mit Widerständen R2a, R2b beschaltet ist. Am Ausgang dieses Differenzverstärkers 55 liegt das ZF-Signal an.

Die Funktion dieser Ausführungsform unterscheidet sich im wesentlichen dahingehend von der ersten und zweiten Ausführungsform, daß die beiden Fotodioden über den Verstärker AMP an dem Verbindungspunkt ihrer Kathoden im Gleichtakt ausgesteuert werden. Mit den durch die Stichleitungen 52a, 52b erzeugten Kurzschlüssen wird dabei jeweils die entsprechende Aussteuerung sichergestellt. Der Gleichstromkreis schließt sich nach Masse über den niederohmigen Eingang des Transimpedanzverstärkers. Der Zwischenfrequenzstrom wird an den Anoden der beiden Fotodioden PD1, PD2 abgegriffen und mit dem ersten bzw. zweiten Verstärker 12a, 12b in entsprechende Spannungen umgesetzt. Die Ausgangssignale dieser Verstärker werden phasenrichtig überlagert am Ausgang des Differenzverstärkers 55 als ZF-Signal abgegeben.

Auch diese dritte Ausführungsform hat den Vorteil des gemeinsamen Kathodenanschlusses der Fotodioden, so daß eine Integration auf einem Chip möglich ist. Darüberhinaus ist nur ein Oszillator-Verstärker AMP erforderlich. Durch die niedrigere Belastung der Transimpedanzverstärker (durch jeweils nur eine Fotodiode) kann schließlich eine größere Bandbreite und eine bessere Stabilität erzielt werden.

Figur 3d zeigt schließlich eine vierte Ausführungsform der Erfindung, bei der die Fotodioden wie bei der ersten Ausführungsform seriell geschaltet sind. Der Verbindungspunkt der Fotodioden ist mit dem Ausgang des niederohmigen Verstärkers AMP sowie einer hochohmigen Leitung 53 mit einer Länge von etwa einem Viertel der Wellenlänge verbunden, an deren Ausgang eine niederohmige Stichleitung 54 mit etwa gleiche Länge sowie der invertierende Eingang des über den Widerstand $R_t$ rückgekoppelten Transimpedanzverstärkers 12 anliegt. An der Anode der ersten Fotodiode PD1 liegt ein nach Masse geschalteter Blockkondensator $C_{P1}$ sowie ein Widerstand Rb1, über den eine negative Vorspannung -Vb zugeführt wird. In entsprechender Weise ist die Kathode der zweiten Fotodiode PD2 mit einem nach Masse geschalteten Blockkondensator $C_{P2}$ sowie einem Widerstand Rb2 verbunden, über den eine positive Vorspannung +Vb zugeführt wird.

Im Gegensatz zu den anderen Ausführungsformen erfolgt die optische Signalaussteuerung in diesem Fall gleichphasig über die optischen Fasern 4c1, 4c2, so daß die optische Verzögerungsleitung 11a gemäß Figur 1 bzw. die Einrichtung 3a zur Erzeugung einer einstellbaren Vorspannung für die Laserdiode 3 und das optische Verzögerungsglied 11b gemäß Figur 2 nicht erforderlich sind.

Die Fotodioden PD1, PD2 werden an ihrem Verbindungspunkt durch das Pumpsignal des vorzugsweise niederohmigen Verstärkers AMP ausgesteuert. Der Signalpfad zur Masse wird über die beiden Blockkondensatoren $C_{P1}$, $C_{P2}$ sichergestellt. Die beiden Leitungselemente 53, 54 bilden ein Bandsperrfilter und unterdrücken das Pumpsignal (Oszillator) am ZF-Ausgang. Durch den hohen Eingangswiderstand an den Leitungselementen im Bereich der Pumpsignalfrequenz wird eine Beeinträchtigung der Signalanpassung zwischen dem Verstärker AMP und den Fotodioden PD1, PD2 verhindert. Die Fotodioden werden mit der negativen bzw. positiven Vorspannung -Vb, +Vb im Sperrbereich ihrer Kennlinie vorgespannt. Die einzelnen ZF-Ströme an den beiden Fotodioden PD1, PD2 überlagern sich bei dieser Beschaltung wieder konstruktiv am Verbindungspunkt und werden in der oben beschriebenen Weise mittels des Transimpedanzverstärkers 12 umgesetzt und liegen als ZF-Signal an dem ZF-Ausgang an.

Der wesentliche Vorteil dieser vierten Ausführungsform liegt in erster Linie in dem sehr geringen Schaltungsaufwand. Es ist nur ein optischer Leistungsteiler, jedoch kein optischer Phasenschieber erforderlich. Allerdings muß mittels des aus den Leitungselementen 53, 54 gebildeten Bandsperrfilters eine Trennung der Oszillatorfrequenz von der Zwischenfrequenz vorgenommen werden.

Figur 4 zeigt schließlich ein Breitband-Übertragungssystem für eine optische Übertragungsstrecke, wobei gleiche Elemente wie in den Figuren 1 und 2 mit gleichen Bezugsziffern bezeichnet sind.

Das Eingangsteil umfaßt wiederum im wesentlichen eine Antenne 1, einen HF-Verstärker 2 sowie eine Laserdiode 3, deren Licht mit der zu übertragenden HF-Spannung moduliert und dann in eine optische Faser 4 eingekoppelt wird. Zusätzlich ist in die optische Übertragungsstrecke ein optischer Verstärker 41 eingefügt, der im allgemeinen jedoch nur bei mehr als vier parallel geschalteten Empfangskanälen erforderlich ist.

Die Empfangskanäle haben vorzugsweise die Ausführung gemäß Figur 1 und sind jeweils auf eine vorbestimmte Empfangsfrequenz abgestimmt.

Jeder Empfangskanal umfaßt somit einen Strahlteiler 10, an dessen Eingang die optische Faser 4 angeschlossen ist, zur Erzeugung eines ersten und eines zweiten Teilstrahls, die jeweils über ein erstes bzw. ein zweites optisches Faserstück 4a, 4b geführt werden. In das erste optische Faserstück 4a ist ein Verzögerungsglied 11a geschaltet, das den ersten Teilstrahl mit einer Phasenverschiebung von etwa 180° gegenüber dem zweiten Teilstrahl beaufschlagt.

Die Ausgänge der beiden Faserstücke 4a, 4b liegen an den Eingängen eines optischen Mischers 12, wie er anhand der Figuren 3a bis 3c (und - bei Verzicht auf das Verzögerungsglied 11a - auch Fig. 3d) erläutert wurde. Schließlich ist mit dem Mischer auch ein Oszillator 13 verbunden, der eine Spannung mit einer Frequenz erzeugt, mit der das empfangene HF-Signal auf ein gewünschtes ZF-Signal umgesetzt wird.

**Patentansprüche**

1. Empfangseinrichtung für eine optische HF-Signalübertragungsstrecke zur Erzeugung eines elektrischen ZF-Signals, umfassend

    einen Strahlteiler (10) zur Aufteilung eines empfangenen optischen HF-Signals in einen ersten und einen zweiten Teilstrahl;
    eine erste und eine zweite Fotodiode (PD1; PD2), auf die jeweils der erste bzw. der zweite Teilstrahl des optischen HF-Signals gerichtet ist;
    eine erste Einrichtung (-Vb, +Vb) zur Vorspannung der Fotodioden in den Sperrbereich;
    eine zweite Einrichtung (13; 13a, AMP) zur Beaufschlagung der Fotodioden mit einer Oszillatorfrequenz; und
    einen mit den Fotodioden (PD1, PD2) verbundenen Ausgangsverstärker (12; 55) zur Erzeugung des elektrischen ZF-Signals

    **dadurch gekennzeichnet, dass**
ein Verzögerungsglied (11a; 11 b) zum Beaufschlagen des ersten Teilstrahls des optischen HF-Signals mit einer Phasenverschiebung von etwa 180° gegenüber dem zweiten Teilstrahl vorhanden ist und dass die zweite Einrichtung (13; 13a, AMP) einen Phasenschieber (13a) zur Erzeugung einer um etwa 180° gegenüber einer ersten Oszillatorfrequenz phasenverschobenen zweiten OsziHatortrequenz sowie einen ersten und zweiten Verstärker (AMP1, AMP2) umfasst, über den die erste bzw. zweite Oszillatorfrequenz den äußeren Anschlüssen der Fotodiode (PD1, PD2) zugeführt wird.

2. Empfangseinrichtung nach Anspruch 1, **dadurch gekennzeichnet, dass** die Fotodioden (PD1, PD2) seriell geschaltet sind.

3. Empfangseinrichtung nach Anspruch 1, **dadurch gekennzeichnet, dass** die Fotodioden (PD1, PD2) antiseriell geschaltet sind.

4. Empfangseinrichtung nach einem der vorangehenden Ansprüche, **dadurch gekennzeichnet, dass** das Verzögerungsglied eine schaltbare optische Verzögerungsteitung (11a) ist.

5. Empfangseinrichtung nach einem der Ansprüche 1-3, **dadurch gekennzeichnet, dass** das Verzögerungsglied durch eine dispersive optische Faser (11 b) gebildet und ein Mittel (3a) zur Erzeugung einer einstellbaren Vorspannung für eine das optische HF-Signal erzeugende Laserdiode (3) vorgesehen ist.

6. Empfangseinrichtung nach einem der vorangehenden Ansprüche, **dadurch gekennzeichnet, dass** die Fotodioden durch die zweite Einrichtung über ihre äußeren Anschlüsse im Gegentakt angesteuert werden, wobei der Abgriff des Ausgangsverstärkers (12) an dem inneren Anschluss (Verbindungspunkt) der Fotodioden (PD1, PD2) liegt.

7. Empfangseinrichtung nach einem der vorhergehenden Ansprüche, **dadurch gekennzeichnet, dass** die optische HF-Übertragungsstrecke eine optische Faserstrecke (4) ist und der erste und der zweite Teilstrahl des optischen HF-Signals jeweils über ein erstes bzw. ein zweites optisches Faserstück (4a, 4b) geführt wird.

8. Empfangseinrichtung nach einem der vorhergehenden Ansprüche, **dadurch gekennzeichnet, dass** das HF-Signal im Bereich von Mikrowellen oder Millimeterwellen liegt.

9. Empfangseinrichtung nach einem der vorhergehenden Ansprüche, **dadurch gekennzeichnet, dass** der Ausgangsverstärker ein Transimpedanzverstärker (12; 12a, 12b) ist.

10. Breitbandempfänger für eine optische Übertragungsstrecke, mit einer Mehrzahl von Empfangskanälen, **dadurch gekennzeichnet, dass** mindestens einer der Empfangskanäle eine Empfangseinrichtung nach einem der vorhergehenden Ansprüche aufweist.

**Claims**

1. Receiving device for an optical RF signal transmission path for production of an electrical IF signal, comprising

   a beam splitter (10) for splitting a received optical RF signal into a first and a second beam element;
   a first and a second photodiode (PD1; PD2), to which, respectively, the first and the second beam element of the optical RF signal are passed;
   a first device (-Vb, +Vb) for biasing the photodiodes into the reverse-biased area;
   a second device (13; 13a, AMP) for application of an oscillator frequency to the photodiodes; and an output amplifier (12; 55) which is connected to the photodiodes (PD1, PD2) for production of the electrical IF signal,

   **characterized in that**
   a delay element (11a; 11b) for application of a phase shift of about 180° with respect to the second beam element to the first beam element of the optical RF signal is provided, and **in that** the second device (13; 13a, AMP) has a phase shifter (13a) for production of a second oscillator frequency, which is phase-shifted through about 180° with respect to a first oscillator frequency, and has a first and a second amplifier (AMP1, AMP2) via which the first and second oscillator frequency are supplied to the external connections of the photodiode (PD1, PD2).

2. Receiving device according to Claim 1, **characterized in that** the photodiodes (PD1, PD2) are connected in series.

3. Receiving device according to Claim 1, **characterized in that** the photodiodes (PD1, PD2) are connected back-to-back in series.

4. Receiving device according to one of the preceding claims, **characterized in that** the delay element is a switchable optical delay line (11a).

5. Receiving device according to one of Claims 1-3, **characterized in that** the delay element is formed by a dispersive optical fibre (11b), and a means (3a) is provided for production of a variable bias voltage for a laser diode (3) which produces the optical RF signal.

6. Receiving device according to one of the preceding claims, **characterized in that** the photodiodes are driven in opposite senses by the second device via their external connections, with the tap on the output amplifier (12) being connected to the internal connection (junction point) of the photodiodes (PD1, PD2).

7. Receiving device according to one of the preceding claims, **characterized in that** the optical RF transmission path is an optical fibre path (4), and the first and the second beam elements of the optical RF signal are respectively passed via a first and a second optical fibre piece (4a, 4b).

8. Receiving device according to one of the preceding claims, **characterized in that** the RF signal is in the microwave or millimetric wave band.

9. Receiving device according to one of the preceding claims, **characterized in that** the output amplifier is a transimpedance amplifier (12; 12a, 12b).

10. Broadband receiver for an optical transmission path, having two or more receiving channels, **characterized in that** at least one of the receiving channels has a receiving device according to one of the preceding claims.

**Revendications**

1. Récepteur de liaison de transmission optique de signal HF pour produire un signal FI électrique comprenant

   un diviseur de faisceau (10) pour diviser un signal HF optique reçu en un premier et deuxième faisceau partiel;
   une première et deuxième photodiode (PD1; PD2), sur lesquelles sont dirigés respectivement les premier et deuxième faisceaux partiels du signal HF optique;
   un premier dispositif (-Vb; +Vb) pour polariser les photodiodes dans la région de l'état bloqué;
   un deuxième dispositif (13; 13a, AMP) pour appliquer une fréquence d'oscillateur aux photodiodes; et
   un amplificateur de sortie (12; 55) relié aux photodiodes (PD1, PD2) pour produire le signal FI électrique,

   **caractérisé en ce que**,
   un élément de retard (11a; 11b) est disponible pour appliquer au premier faisceau partiel le signal HF optique avec un déphasage d'environ 180° par rapport au deuxième faisceau partiel et **en ce que** le deuxième dispositif (13; 13a, AMP) comprend un déphaseur (13a) pour produire une deuxième fréquence d'oscillateur déphasée d'environ 180° par rapport à une première fréquence d'oscillateur, ainsi qu'un premier et deuxième amplificateur (AMP1, AMP2) par l'intermédiaire desquels la première et deuxième fréquence d'oscillateur est appliquée aux connexions externes des photodiodes (PD1, PD2).

2. Récepteur selon la revendication 1, **caractérisé en ce que** les photodiodes (PD1, PD2) sont montées en série.

3. Récepteur selon la revendication 1, **caractérisé en ce que** les photodiodes (PD1, PD2) sont montées en anti-série (tête-bêche).

4. Récepteur selon l'une quelconque des revendications précédentes, **caractérisé en ce que** l'élément de retard est une ligne de retard optique commutable (11a).

5. Récepteur selon l'une quelconque des revendications 1 à 3, **caractérisé en ce que** l'élément de retard est formé par une fibre optique dispersive (11b) et un moyen (3a) est prévu pour produire une tension de polarisation ajustable pour une diode laser (3) produisant le signal HF optique.

6. Récepteur selon l'une quelconque des revendications précédentes, **caractérisé en ce que** les photodiodes sont commandées symétriquement par le deuxième dispositif par l'intermédiaire de ses connexions externes, la prise de l'amplificateur de sortie (12) se trouvant au niveau de la connexion interne (point de connexion) des photodiodes (PD1, PD2).

7. Récepteur selon l'une quelconque des revendications précédentes, **caractérisé en ce que** la liaison de transmission HF optique est une liaison par fibre optique (4) et le premier et deuxième faisceau partiel du signal HF optique est conduit à chaque fois par l'intermédiaire d'un premier respectivement deuxième tronçon de fibre optique (4a, 4b).

8. Récepteur selon l'une quelconque des revendications précédentes, **caractérisé en ce que** le signal HF se trouve dans le domaine des micro-ondes ou des ondes millimétriques.

9. Récepteur selon l'une quelconque des revendications précédentes, **caractérisé en ce que** l'amplificateur de sortie est un amplificateur à impédance transversale (12; 12a, 12b).

10. Récepteur à large bande de liaison de transmission optique, ayant une pluralité de canaux récepteurs, **caractérisé en ce qu'**au moins l'un des canaux récepteurs présente un récepteur selon l'une quelconque des revendications précédentes.

FIG. 1

FIG. 2

FIG. 3a

FIG. 3b

52a

$R_{ta}$

$R_{1a}$  $R_{2a}$

4a

PD1

12a

$L_b$

13  AMP  $C_s$  $R_b$  +Vb  ZF

55

PD2

4b  $R_{tb}$

$R_{1b}$  $R_{2b}$

12b

52b

FIG. 3c

12

$C_{p1}$  $R_{b1}$  $- Vb$

4c1

PD1

54

$R_t$

13

AMP

53

$PD2$

ZF

$- +$

12

4c2

$R_{b2}$

$+ Vb$

$C_{p2}$

FIG. 3d

FIG. 4

FIG. 5